# EUROPEAN PATENT APPLICATION

(11) **EP 4 545 837 A1**
(43) Date of publication of application: **30.04.2025**
(21) Application number: 22948059.5
(22) Date of filing: 16.12.2022
(51) Int. Cl.: F16L 55/00, F16L 11/12, F16L 11/133, F17D 5/06, G01M 3/16

(54) **FLUID LEAKAGE DETECTION SYSTEM AND METHOD FOR MARINE HOSE**

(30) Priority: 22.06.2022 JP 2022100069
(71) Applicant: The Yokohama Rubber Co., Ltd., Hiratsuka-shi, Kanagawa 254-8601 (JP)
(72) Inventor: ISHIBASHI Yusuke, Hiratsuka-shi, Kanagawa 254-8601 (JP)
(74) Representative: Grünecker Patent- und Rechtsanwälte PartG mbB
(86) International application number: PCT/JP2022/046526
(87) International publication number: WO 2023/248500

(57) **Abstract**

Provided is a fluid leakage detection system and method for a marine hose that can accurately detect presence or absence of fluid leakage in various types of marine hoses. As a detection element (15) forming a loop circuit (17) connected to an IC tag (11) that is passive, conductive rubber or conductive paste whose electrical resistance value changes to a value equal to or greater than a reference by being impregnated with a fluid (L) is adopted, and the detection element (15) is caused to continuously extend in a longitudinal direction of the hose body between an inner surface layer (3) and a first reinforcing layer (4). The IC tag (11) is disposed on a surface of the marine hose (1). Electrical resistance value data (Dr) at the loop circuit (17) when the IC tag (11) is activated by transmission radio waves (R1) transmitted from a communication unit (19) is transmitted to the communication unit (19) via return radio waves (R2) transmitted from the IC tag (11) in response to the transmission radio waves (R1) and is input to the computation device (20). Presence or absence of leakage of the fluid (L) is determined in accordance with a magnitude of a difference between the electrical resistance value data (Dr) and reference resistance value data (Dc).

## Description

### Technical Field

The present invention relates to a fluid leakage detection system and method for a marine hose and particularly relates to a fluid leakage detection system and method for a marine hose that can accurately detect the presence or absence of fluid leakage in various types of marine hoses.

### Background Art

In double carcass marine hoses, fluid leaked from a flow path is temporarily stored in a fluid retention layer formed between reinforcing layers formed with an interval therebetween in a hose radial direction to prevent leakage outside the hose. A known fluid leakage detection system detects fluid leakage using an IC tag disposed in this fluid retention layer (for example, see Patent Document 1).

However, there is also a single carcass type of marine hose that does not include a fluid retention layer. For single carcass marine hoses, it is also desirably to detect fluid leakage from the flow path, but an appropriate detection system has not been established. Thus, there is room for improvement in accurately detecting the presence or absence of fluid leakage in various types of marine hoses.

### Citation List

### Patent Literature

Patent Document 1: JP 2020-133766 A

### Summary of Invention

### Technical Problem

An object of the present invention is to provide a fluid leakage detection system and method for a marine hose that can accurately detect the presence or absence of fluid leakage in various types of marine hoses.

### Solution to Problem

To achieve the object described above, a fluid leakage detection system for a marine hose according to an embodiment of the present invention is a fluid leakage detection system for a marine hose provided with a hose body including a reinforcing layer and a buoyant layer layered in this order from an inner circumferential side between an inner surface layer and an outer surface layer and connection fittings connected to both respective ends of the hose body in a longitudinal direction, the inner surface layer including an inner circumferential region as a flow path. The fluid leakage detection system includes: the marine hose; a detector including an IC tag that is passive and a loop circuit formed of a detection element connected to the IC tag; a communication unit disposed outside the marine hose and configured to wirelessly communicate with the IC tag; and a computation device into which obtained data from the communication unit is input. The IC tag is disposed on a surface of the marine hose. The detection element is formed of conductive rubber or conductive paste whose electrical resistance value changes to a value equal to or greater than a preset reference by being impregnated with fluid flowing through the flow path, the detection element continuously extending in the longitudinal direction of the hose body between the inner surface layer and the reinforcing layer. The IC tag is activated by transmission radio waves transmitted from the communication unit, return radio waves is transmitted from the IC tag activated in response to the transmission radio waves, and thus wireless communication between the IC tag and the communication unit is performed. Electrical resistance value data at the loop circuit when the IC tag is activated is transmitted from the IC tag to the communication unit via the return radio waves and is input into the computation device as the obtained data, and presence or absence of leakage of the fluid from the flow path is determined by the computation device in accordance with a magnitude of a difference between the obtained data input and preset reference resistance value data.

A fluid leakage detection method for a marine hose according to an embodiment of the present invention is a fluid leakage detection method for a marine hose provided with a hose body including a reinforcing layer and a buoyant layer layered in this order from an inner circumferential side between an inner surface layer and an outer surface layer and connection fittings connected to both respective ends of the hose body in a longitudinal direction, the inner surface layer including an inner circumferential region as a flow path. The fluid leakage detection method includes: using a detector including an IC tag that is passive and a loop circuit formed of a detection element connected to the IC tag, a communication unit disposed outside the marine hose and configured to wirelessly communicate with the IC tag, and a computation device into which obtained data from the communication unit is input; disposing the IC tag on a surface of the marine hose, forming the detection element of conductive rubber or conductive paste whose electrical resistance value changes to a value equal to or greater than a preset reference by being impregnated with fluid flowing through the flow path, and continuously extending the detection element in the longitudinal direction of the hose body between the inner surface layer and the reinforcing layer; activating the IC tag with transmission radio waves transmitted from the communication unit, transmitting return radio waves from the IC tag to the communication unit in response to the transmission radio waves, thus performing wireless communication between the IC tag and the communication unit, transmitting electrical resistance value data at the loop circuit when the IC tag is activated from the IC tag to the communication unit via the return radio waves, and inputting the electrical resistance value data as the obtained data into the computation device; and determining, by the computation device, presence or absence of leakage of the fluid from the flow path in accordance with a magnitude of a difference between the obtained data input and preset reference resistance value data.

### Advantageous Effects of Invention

According to an embodiment of the present invention, the detector is installed in the marine hose by disposing the IC tag on the surface of the marine hose and continuously extending the loop circuit in the longitudinal direction of the marine hose between the inner surface layer and the reinforcing layer. This allows the detector to be installed in both a so-called single carcass type and double carcass type. Then, when the fluid leaks from the flow path to the outer circumferential side of the inner surface layer and impregnates the detection element forming the loop circuit, an electrical resistance value at the loop circuit when the IC tag is activated by the transmission radio waves greatly changes to be equal to or greater than a preset reference. Thus, the presence or absence of leakage of the fluid from the flow path can be accurately determined on the basis of the magnitude of the difference between the electrical resistance value data input to the computation device as the obtained data and the preset reference resistance value data. Since the electrical resistance value data can be obtained via wireless communication using the return radio waves transmitted from the passive IC tag to the communication unit in response to the transmission radio waves from the communication unit, it greatly contributes to reduction in labor for checking the fluid leakage.

### Brief Description of Drawings

FIG. 1 is an explanatory diagram illustrating a marine hose with an embodiment of a detection system applied.
FIG. 2 is an explanatory diagram illustrating an example of a portion of the marine hose in FIG. 1 enlarged in a longitudinal cross-sectional view.
FIG. 3 is an explanatory diagram illustrating an example of a portion of the marine hose in a cross-sectional view taken along A-A of FIG. 2.
FIG. 4 is an explanatory diagram illustrating an example of a detector in a top view.
FIG. 5 is an explanatory diagram illustrating an example of the detector of FIG. 4 in a side view.
FIG. 6 is an explanatory diagram illustrating an example of a casing and the detector of FIG. 2 in a longitudinal cross-sectional view.
FIG. 7 is an explanatory diagram illustrating an example of the arrangement of a loop circuit in a top view with a portion of the marine hose removed.
FIG. 8 is an explanatory diagram illustrating a modified example of the detector in a top view.
FIG. 9 is an explanatory diagram illustrating an example of the arrangement of the loop circuit of the detector of FIG. 8 in a top view with a portion of the marine hose removed.
FIG. 10 is a B-B cross-sectional view of FIG. 9.
FIG. 11 is an explanatory diagram illustrating a magnified portion of another marine hose with a detection system applied in a longitudinal cross-sectional view.

### Description of Embodiments

Hereinafter, a fluid leakage detection system (hereinafter referred to as a detection system) and method for a marine hose according to an embodiment of the present invention will be described with reference to the drawings.

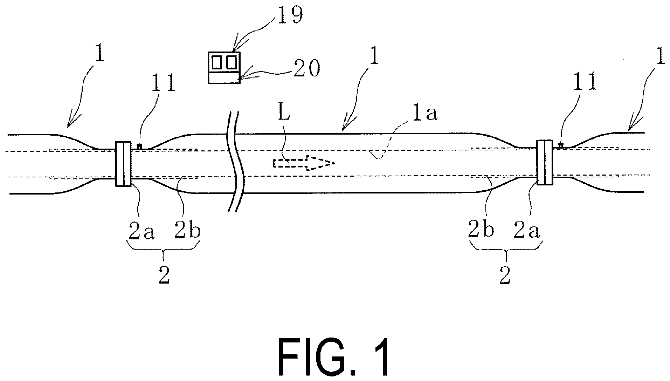

The detection system according to an embodiment illustrated in FIG. 1 is applied to a floating type marine hose 1 used in a state where it floats on the water surface and is configured to detect the presence or absence of leakage of a fluid L from a flow path 1a. The marine hose 1 includes a cylindrical hose body and connection fittings 2 connected to both ends of the hose body in a longitudinal direction. The connection fittings 2 each includes a nipple 2b extending in the longitudinal direction of the hose body and a flange 2a joined to one end of the nipple 2b in the longitudinal direction. The marine hoses 1 are connected to each other through the connection fittings 2, and generally about ten marine hoses 1 are connected and used.

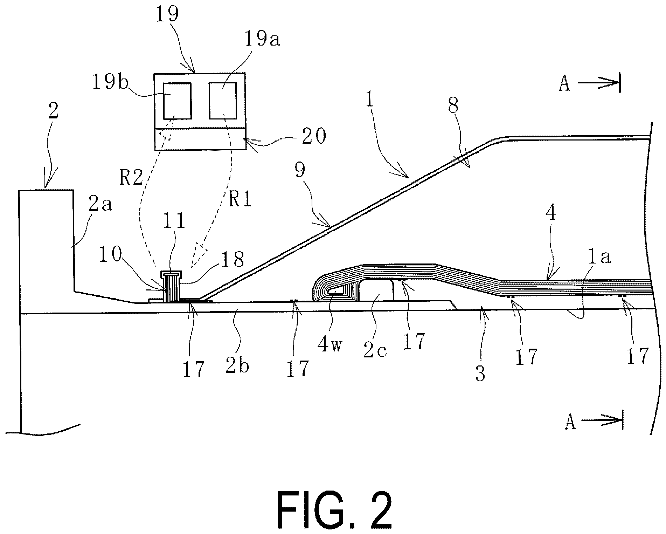

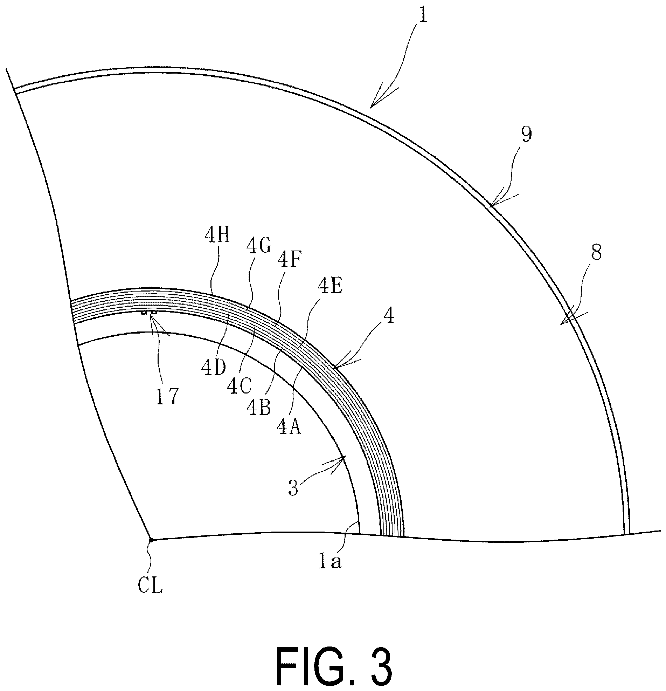

As illustrated in FIGS. 2 and 3, in the hose body between the nipples 2b at both ends of the marine hose 1 in the longitudinal direction, an inner surface layer 3, a first reinforcing layer 4, a buoyant layer 8, and an outer surface layer 9 are layered in this order from the inner circumferential side to the outer circumferential side. Since the hose body does not include a fluid retention layer 7 described below, the marine hose 1 is a single carcass type. The inner circumferential side of the inner surface layer 3 serves as the flow path 1a of the fluid L. Examples of the fluid L include crude oil, heavy oil, gasoline, LPG, water, seawater, chemicals (alcohols refined from gasoline), and the like.

An appropriate material is selected for the inner surface layer 3 in accordance with the type of the fluid L, and the inner surface layer 3 is formed of a material having excellent durability and corrosion resistance to the fluid L. In a case where the fluid L is crude oil, heavy oil, gasoline, or the like, the inner surface layer 3 is formed of nitrile rubber or the like having an excellent oil resistance.

The first reinforcing layer 4 includes a plurality of layers of reinforcing cord layers 4A to 4H formed of multiple reinforcing cords arranged side by side and covered with rubber. In this embodiment, one reinforcing cord layer group of eight reinforcing cord layers 4A to 4H layered together corresponds to the first reinforcing layer 4, but the number of layers of the reinforcing cord layers 4A to 4H is appropriately determined on the basis of the required performance of the marine hose 1. The first reinforcing layer 4 is fixed to each nipple 2b using nipple wires 4w at both end portions and a fixing ring 2c or the like disposed projecting out on the outer circumferential surface of each nipple 2b.

The buoyant layer 8 is formed of a material such as sponge rubber, polyurethane foam or the like that exhibits buoyancy to float the marine hose 1 above the sea. The outer surface layer 9 is formed of a non-water-permeable material such as rubber, and has a line pattern or the like having excellent visibility on the surface thereof.

The detection system includes the marine hose 1, a detector 10, a communication unit 19, and a computation device 20. The communication unit 19 is separate from the marine hose 1 and is disposed on the outside of the marine hose 1. In this embodiment, the communication unit 19 and the computation device 20 are integrally formed, but a configuration can be used in which they are separate and independent.

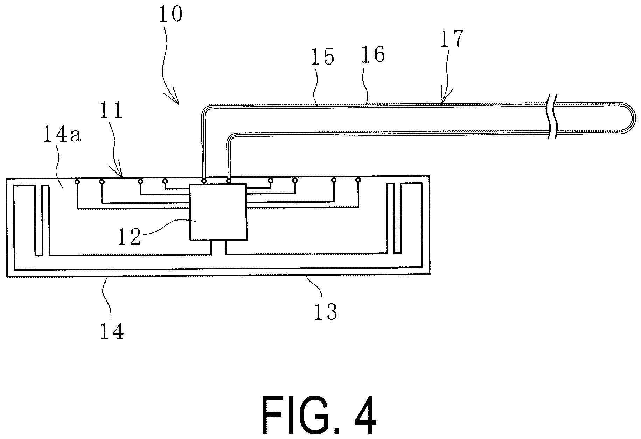

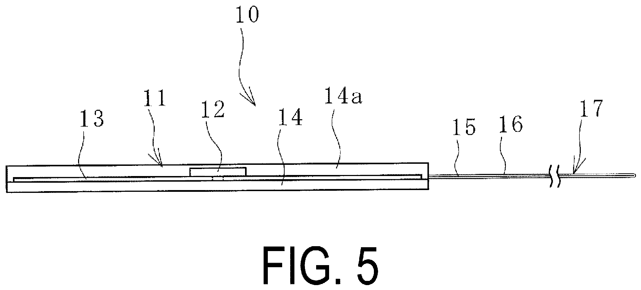

As illustrated in FIGS. 4 and 5, the detector 10 includes a passive IC tag 11 and a loop circuit 17 connected to the IC tag 11. The IC tag 11 is disposed on the surface of the marine hose 1 and positioned on the water. The loop circuit 17 is formed by a detection element 15 and extends continuously in the longitudinal direction of the hose body between the inner surface layer 3 and the first reinforcing layer 4.

Specifically, the IC tag 11 includes an IC chip 12 and an antenna unit 13 connected to the IC chip 12. The IC chip 12 and the antenna unit 13 are disposed on a substrate 14. The IC chip 12 and the antenna unit 13 are covered with an insulating layer 14a, and the entire IC tag 11 is electrically insulated from the outside. However, the IC tag 11 and the detection element 15 are electrically conductively connected to each other. The insulating layer 14a is formed of a known insulating material such as insulating rubber, resins such as polyester, and natural fibers.

The IC chip 12 arbitrarily stores tag unique information such as an identification number of the IC tag 11, element identification information for specifying the detection element 15 connected to the IC tag 11, and other necessary information. Although various types of known antennas can be used as the antenna unit 13, a dipole antenna extending left-right symmetrically from the IC chip 12 is employed in this embodiment. The antenna unit 13 is appropriately folded back so as to increase the extension length in a limited space.

The commonly distributed specifications are adopted for the IC tag 11, and for example, an RFID tag can be used. The IC chip 12 has a very small size, for example, a vertical dimension and a horizontal dimension of 50 mm or less (corresponding to an outer diameter of 50 mm or less) and a thickness of 5 mm or less. The size of the antenna unit 13 is also very small, for example, the vertical dimension and the horizontal dimension are each 50 mm or less (corresponding to an outer diameter of 50 mm or less) and the thickness is 10 mm or less.

The detection element 15 is a linear member with electrical conductivity and is formed of conductive rubber or conductive paste (paste containing metal particles) whose electrical resistance value changes to a value equal to or greater than a preset reference by being impregnated with the fluid L flowing through the flow path 1a. If the difference in the electrical resistance value of the detection element 15 depending on presence or absence of impregnation with the fluid L is too small, the sensitivity for detecting leakage of the fluid L is decreased. Thus, preferably, the difference in the electrical resistance value of the detection element 15 is larger when the detection element 15 is impregnated with the fluid L compared to when the detection element 15 is not impregnated. Thus, the electrical resistance value per unit length in a unit cross-sectional area of the detection element 15 when impregnated with the fluid L is set to, for example, twice or more, preferably three times or more, and more preferably five times or more of the reference electrical resistance value per unit length in a unit cross-sectional area of the detection element 15 in a state in which it is not impregnated with the fluid L. The electrical resistance value in the case of impregnation with the fluid L is a value measured in a state in which the fluid L adheres to the entire outer circumferential surface of the detection element 15 in a linear state. In order to make the electrical resistance value of the detection element 15 equal to or greater than the preset reference value by impregnation with the fluid L as described above, for example, the content ratio between the conductive component and the insulating component of the detection element 15 is adjusted.

When the detection element 15 is bent in conjunction with localized bending of the marine hose 1, the electrical resistance value of the detection element 15 is increased to some extent. Thus, it becomes unclear whether the change in the electrical resistance value of the detection element 15 is caused by the impregnation of the detection element 15 with the fluid L or the bending of the detection element 15. Thus, preferably, the difference in the electrical resistance value in the case where the detection element 15 is bent is smaller than the difference in the case where the detection element 15 is not bent. Thus, the electrical resistance value per unit length in a unit cross-sectional area of the detection element 15 in a bent state is set to, for example, 1.5 times or less, preferably 1.3 times or less, and more preferably 1.1 times or less of the reference electrical resistance value per unit length in a unit cross-sectional area of the detection element 15 in a linear state. The electrical resistance value in a state in which the detection element 15 is bent is a value measured in a state in which the detection element 15 is bent by 90°. In order to make the electrical resistance value of the detection element 15 in a bent state equal to or less than the preset reference value as described above, for example, the content ratio of the elasticity component of the detection element 15 is adjusted.

The detection element 15 has an outer diameter (width) ranging from, for example, 1 mm to 20 mm and preferably from 5 mm to 10 mm. The detection element 15 is preferably a simple wire having a circular cross-section but may be a flat linear member (band-like wire).

The outer circumferential surface of the detection element 15 is covered with an insulator 16, and the detection element 15 is electrically insulated from the outside. The insulator 16 is formed of a known insulating material in a similar manner as the insulating layer 14a. However, the insulator 16 is formed of a material through which the fluid L permeates or includes a through-hole so that the fluid L can pass through the insulator 16 and reach the detection element 15.

One end portion and the other end portion of the detection element 15 in the longitudinal direction are electrically connected to the IC chip 12, forming the loop circuit 17 outside the IC tag 11. The interval between the detection elements 15 extending in parallel in the loop circuit 17 is, for example, 5 mm or more and 50 mm or less. The IC tag 11 (the substrate 14) is provided with a large number of pairs of terminals connected to the IC chip 12. Each of one end portion and the other end portion of the detection element 15 in the longitudinal direction is connected to the pair of terminals and thus is electrically connected to the IC chip 12. The detection element 15 and the pair of terminals are connected by using an eyelet and a crimp terminal or by using a conductive adhesive, welding, solder, or the like. In this embodiment, five pairs of terminals are provided; however, the number of pairs of terminals provided on the IC tag 11 (the substrate 14) is not particularly limited and may be one pair of terminals. Since a space is restricted, the number of pairs of terminals provided on one IC tag 11 (substrate 14) is, for example, about one to six pairs of terminals.

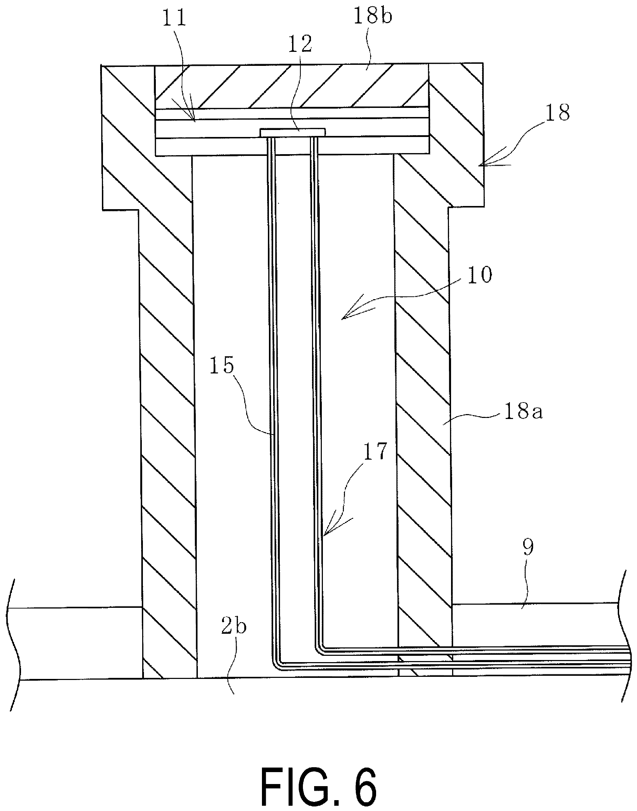

The IC tag 11 is preferably disposed at a longitudinal end portion of the marine hose 1. The loop circuit 17 (detection element 15) preferably extends continuously from one end portion to the other end portion in the longitudinal direction of the hose body so as to cover the entire length of the hose body. In this embodiment, the IC tag 11 is disposed on the surface (outer circumferential surface of the nipple 2b) of the connection fitting 2 at one end portion of the hose body in the longitudinal direction. Specifically, as illustrated in FIG. 6, the IC tag 11 is disposed inside a casing 18. The casing 18 includes a cylindrical base portion 18a and a cover portion 18b attached to an upper end portion of the base portion 18a.

The base portion 18a is erected on the outer circumferential surface of the nipple 2b covered with the outer surface layer 9. The base portion 18a is formed of, for example, stainless steel or a similar metal. The cover portion 18b is screwed to the upper end portion of the base portion 18a to watertightly close the upper end opening, and the IC tag 11 is disposed in the watertightly closed internal space of the casing 18. The cover portion 18b is formed of a material that allows transmission radio waves R1 and return radio waves R2 to pass through, this material being, for example, polycarbonate, polyamide, epoxy resin, or the like. The casing 18 (cover portion 18b) may be orange so as to be noticeable in the ocean, for example.

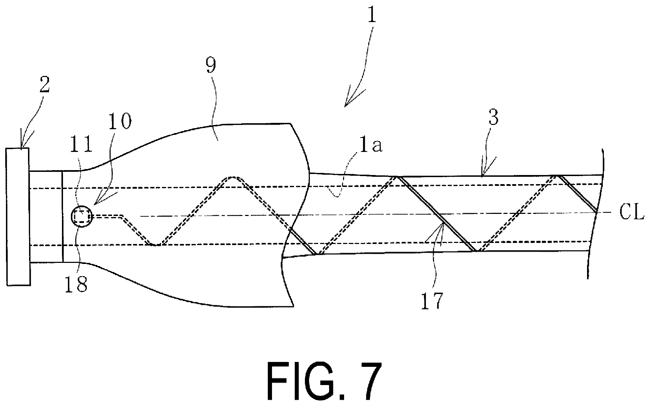

The detection element 15 (loop circuit 17) extends from the inside of the casing 18 toward the hose body, is disposed between the inner surface layer 3 and the first reinforcing layer 4 in the hose body, and extends continuously from one end portion to the other end portion in the longitudinal direction of the hose body. In this embodiment, as illustrated in FIG. 7, the loop circuit 17 is spirally wound around the hose body and extends from one end portion to the other end portion in the longitudinal direction of the hose body. That is, the loop circuit 17 is spirally wound around the outer circumferential surface of the inner surface layer 3. The spiral pitch of the loop circuit 17 is, for example, 20 cm or more and 50 cm or less. A dot-dash line CL in the diagram is an axial center passing through a cross-sectional center CL of the marine hose 1 (hose body). When the loop circuit 17 extends in a spiral shape as described above, there is an advantage that even one loop circuit 17 can efficiently cover the entire range of the hose body.

The communication unit 19 includes a radio wave transmission unit 19a and a radio wave reception unit 19b. The radio wave transmission unit 19a transmits the transmission radio waves R1 to the IC tag 11, and the radio wave reception unit 19b receives the return radio waves R2 transmitted from the IC tag 11. The IC tag 11 is activated by the transmission radio waves R1, and the return radio waves R2 are transmitted from the activated IC tag 11 in response to the transmission radio wave R2, whereby wireless communication is performed between the IC tag 11 and the communication unit 19.

The commonly distributed specifications that allow wireless communication with a passive RFID tag or the like are adopted for the communication unit 19. Thus, the IC tag 11 and the communication unit 19 constitute a radio frequency identification (RFID) system. Since the passive type IC tag 11 is used, the communication distance of the radio waves R1 and R2 between the IC tag 11 and the communication unit 19 is, for example, several tens of centimeters or more and several meters or less.

The frequency of radio waves (R1 and R2) used for wireless communication between the IC tag 11 and the communication unit 19 is mainly in the UHF band (depending on the country, in a range of 860 MHz or more and 930 MHz or less, in a range of 915 MHz or more and 930 MHz or less in Japan), and the HF band (13.56 MHz) may be used. A monitor or the like may be attached to the communication unit 19, for example.

The computation device 20 performs various computational processing using the input data. A known computer is used as the computation device 20, and reference resistance value data Dc is input to the computation device 20 in advance. The reference resistance value data Dc is an electrical resistance value at the loop circuit 17 when the IC tag is activated in a sound state of the marine hose 1 in which the fluid L is not leaking from the flow path 1a. The reference resistance value data Dc is obtained and determined by performing a preliminary test or the like. Data obtained by the communication unit 19 is also input to the computation device 20. An output unit such as a monitor is connected to the computation device 20.

Hereinafter, an example of a detection procedure for determining whether or not the fluid L is leaking from the flow path 1a by using this detection system will be described.

For example, using a work boat or the like, a worker periodically or when necessary approaches the marine hose 1 and performs work to confirm whether there is leakage of the fluid L and sets the communication unit 19 at a position where wireless communication with the IC tag 11 can be checked. Then, as illustrated in FIG. 2, at the check position, the transmission radio waves R1 are transmitted from the radio wave transmission unit 19a toward the IC tag 11, and the transmission radio waves R1 are used to generate electric power to activate the IC tag 11.

Electric power is generated in the IC tag 11 by the transmission radio waves R1 received by the antenna unit 13, and the IC tag 11 is activated. The activated IC tag 11 transmits the return radio waves R2 by the electric power via the antenna unit 13, and the return radio waves R2 are received by the radio wave reception unit 19b. When the IC tag 11 is activated, a current flows through the loop circuit 17, and electrical resistance value data Dr of the loop circuit 17 is stored in the IC tag 11. The electrical resistance value data Dr is transmitted from the IC tag 11 to the communication unit 19 by the return radio waves R2. The electrical resistance value data Dr is received by the radio wave reception unit 19b and thereafter inputted to the computation device 20 as obtained data by the communication unit 19.

The computation device 20 determines presence or absence of a leakage of the fluid L from the flow path 1a on the basis of the magnitude of the difference between the input electrical resistance value data Dr and the preset reference resistance value data Dc. When the inner surface layer 3 is sound and the fluid L is not leaking from the inner surface layer 3, the electrical resistance value data Dr of the loop circuit 17 and the reference resistance value data Dc are substantially the same and have almost no difference.

On the other hand, when the inner surface layer 3 is broken and there is a leakage of the fluid L from the flow path 1a to the outside of the inner surface layer 3, the fluid L comes into contact with the detection elements 15 forming the loop circuit 17, and the electrical resistance value of the loop circuit 17 rapidly and largely changes (becomes extremely large), putting it in an insulating state or a state close to an insulating state. That is, the electrical resistance value data Dr of the loop circuit 17 when the IC tag 11 is activated becomes significantly larger than the reference resistance value data Dc.

Then, the computation device 20 compares the input electrical resistance value data Dr with the reference resistance value data Dc. As a result, when the electrical resistance value data Dr is greater than the reference resistance value data Dc and exceeds a tolerance range AR, it is determined that the fluid L is leaking from the flow path 1a. This result is then communicated via a monitor display or audio. When the difference between the electrical resistance value data Dr and the reference resistance value data Dc is within the tolerance range AR, it is determined that the fluid L is not leaking from the flow path 1a. This result is then communicated via a monitor display, for example.

In this manner, presence or absence of leakage of the fluid L can be accurately determined on the basis of the magnitude of the difference between the electrical resistance value data Dr received by the radio wave reception unit 19b and the reference resistance value data Dc. The tolerance range AR may be appropriately set by performing a preliminary test or the like. According to this embodiment, it is possible to accurately detect a minute leak in which the inner surface layer 3 is cracked and the fluid L gradually leaks out through the outer circumferential surface of the inner surface layer 3.

The computation device 20 can also be configured to connect to a terminal device such as a computer or a smartphone located at a position (remote location) away from the use site of the marine hose 1 via a communication network such as the Internet. According to this configuration, the computation device 20 can transmit the electrical resistance value data Dr and the determination result (presence or absence of leakage of the fluid L) by the computation device 20 to the terminal device located at a position away from the use site of the marine hose 1 through the communication network. For example, the electrical resistance value data Dr and the determination result by the computation device 20 are transmitted to a terminal device of a related person in management of an operating company (user) of the marine hose 1, a sales company of the marine hose 1, or a manufacturing company of the marine hose 1 at a remote location with respect to the use site of the marine hose 1. This allows the related person to obtain the state of the marine hose 1 while being at the remote location with respect to the use site of the marine hose 1.

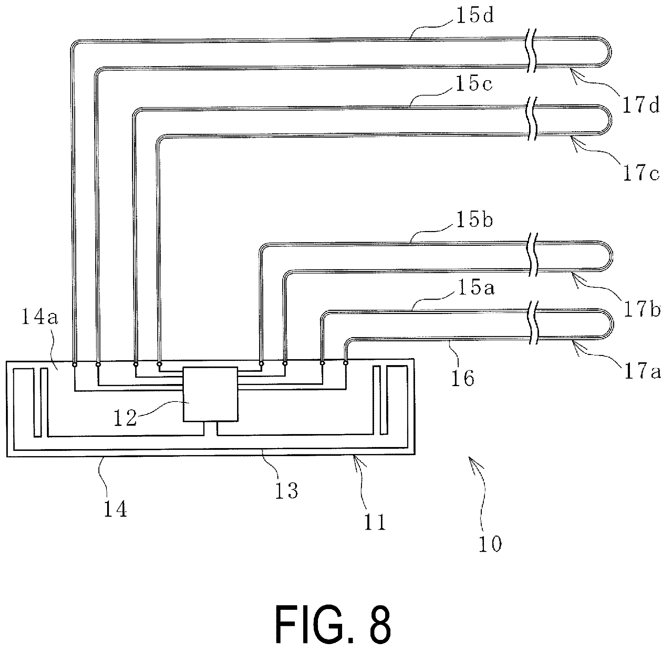

The detector 10 illustrated in FIG. 8 may be used. The detector 10 is configured such that a plurality of (four) detection elements 15a, 15b, 15c, and 15d are connected to one IC tag 11. The outer circumferential surface of each of the detection elements 15a, 15b, 15c, and 15d is covered by the insulator 16. The detection elements 15a, 15b, 15c, and 15d respectively form independent loop circuits 17a, 17b, 17c, and 17d. Thus, the plurality of (four) independent loop circuits 17a to 17d are connected to one IC tag 11.

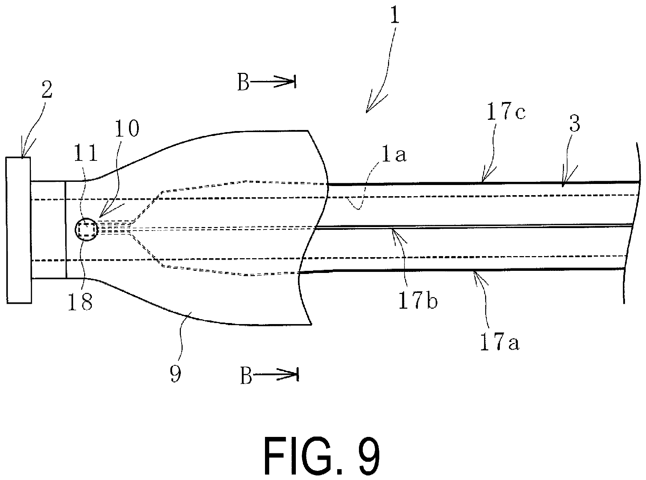

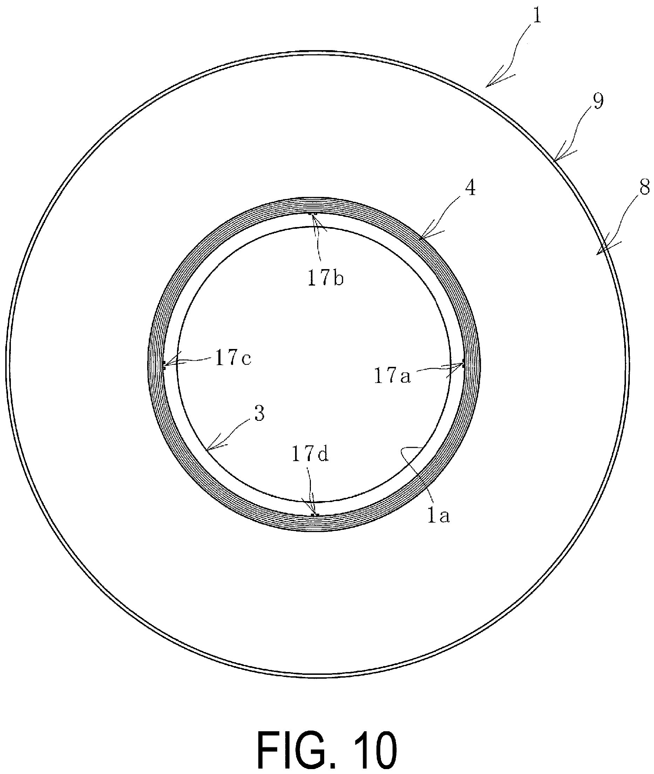

As illustrated in FIGS. 9 and 10, in the marine hose 1 including the detector 10, the independent loop circuits 17a to 17d are disposed at intervals in the circumferential direction with respect to the hose body and linearly extend in the longitudinal direction of the hose body. The loop circuits 17a to 17d are preferably disposed at regular intervals in a circumferential direction of the hose body.

Using this detector 10 has an advantage that even if one loop circuit 17 fails for some reason, the presence or absence of leakage of the fluid L can be detected by the other loop circuits 17. In addition, since the total length of each of the loop circuits 17a to 17d can be shortened, compared to a case where the loop circuit 17 extends in a spiral shape, there is an advantage in that a change in the electrical resistance value at each of the loop circuits 17a to 17d can be detected with more sensitivity (higher sensitivity). When the detector 10 is used, the loop circuits 17a to 17d may be shifted in the longitudinal direction of the hose body and spirally wound around the hose body so as to extend.

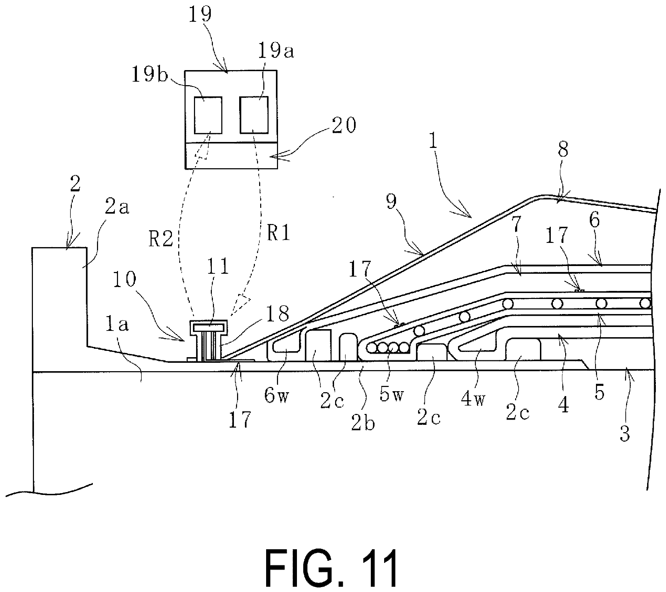

The detection system described above can be applied not only to the marine hose 1 of a single carcass type but also to the marine hose 1 of a double carcass type including the fluid retention layer 7 in the hose body. As illustrated in FIG. 11, in the hose body of the marine hose 1, the inner surface layer 3, the first reinforcing layer 4, a body wire layer 5, the fluid retention layer 7, a second reinforcing layer 6, the buoyant layer 8, and the outer surface layer 9 are layered in this order from the inner circumferential side to the outer circumferential side. The marine hose 1 is a double carcass type including the first reinforcing layer 4 and the second reinforcing layer 6 layered with an interval therebetween in the radial direction of a hose body and the fluid retention layer 7 interposed therebetween. Note that the body wire layer 5 can be discretionarily provided.

The first reinforcing layer 4 and the second reinforcing layer 6 each include a plurality of layers of reinforcing cord layers formed of multiple reinforcing cords arranged side by side and covered with rubber. The body wire layer 5 is configured by spirally winding metal wires around the outer circumferential surface of the first reinforcing layer 4 at predetermined intervals. The first reinforcing layer 4, the body wire layer 5, and the second reinforcing layer 6 are fixed to each nipple 2b using nipple wires 4w, 5w, and 6w at both end portions and a fixing ring 2c or the like disposed projecting out on the outer circumferential surface of each nipple 2b at both end portions of the hose body. The fluid retention layer 7 formed between the first reinforcing layer 4 and the second reinforcing layer 6 is a space for storing the fluid L that has leaked from the flow path 1a.

In the marine hose 1, the loop circuit 17 is disposed inside the fluid retention layer 7. Thus, when the fluid L leaks due to damage to the inner surface layer 3, passes through the body wire layer 5, and enters the fluid retention layer 7, the fluid L comes into contact with the detection elements 15 forming the loop circuit 17, and the electrical resistance value of the loop circuit 17 rapidly and largely changes (becomes extremely large), putting it in an insulating state or a state close to an insulating state. That is, the electrical resistance value data Dr of the loop circuit 17 when the IC tag 11 is activated becomes significantly larger than the reference resistance value data Dc. When the inner surface layer 3 is sound and the fluid L is not leaking from the inner surface layer 3, the electrical resistance value data Dr of the loop circuit 17 and the reference resistance value data Dc have almost no difference. In this manner, as described above, presence or absence of leakage of the fluid L can be accurately determined on the basis of the magnitude of the difference between the electrical resistance value data Dr received by the radio wave reception unit 19b and the reference resistance value data Dc.

When the fluid L flows into a part of the fluid retention layer 7, the fluid L gradually spreads over the entire length of the fluid retention layer 7. Thus, when the loop circuit 17 is disposed inside the fluid retention layer 7, the loop circuit 17 does not need to be extended so long. Thus, the loop circuit 17 is continuously extended from one end in the longitudinal direction of the hose body to a position of, for example, 20% or more and 50% or less of the entire length of the hose body.

As with the marine hose 1 illustrated in FIG. 2, this marine hose 1 may have a configuration in which the loop circuit 17 is disposed on the outer circumferential surface of the inner surface layer 3. When the loop circuit 17 is disposed on the outer circumferential surface of the inner surface layer 3, it preferably extends continuously from one end portion to the other end portion in the longitudinal direction of the hose body. Also in the marine hose 1, as illustrated in FIG. 7, the loop circuit 17 may be spirally wound around the hose body and extended or, as illustrated in FIGS. 9 and 10, the plurality of loop circuits 17 may be disposed at intervals in the circumferential direction of the hose body and linearly extend in the longitudinal direction of the hose body.

As described above, the detection system is highly versatile because it can be applied to both single carcass type and double carcass type marine hoses 1. Further, since the electrical resistance value data Dr can be obtained via wireless communication using the return radio waves R2 transmitted from the IC tag 11 to the communication unit 19 in response to the transmission radio waves R1 from the communication unit 19, it greatly contributes to reduction in labor for checking the fluid leakage. Since the passive IC tag 11 is used, the work of monitoring the status of the battery life of the IC tag 11 also becomes unnecessary.

### Reference Signs List

1 Marine hose
1a Flow path
2 Connection fitting
2a Flange
2b Nipple
2c Fixing ring
3 Inner surface layer
4 First reinforcing layer
4A to 4H Reinforcing cord layer
4w Nipple wire
5 Body wire layer
5w Nipple wire
6 Second reinforcing layer
6w Nipple wire
7 Fluid retention layer
8 Buoyant layer
9 Outer surface layer
10 Detector
11 IC tag
12 IC chip
13 Antenna unit
14 Substrate
14a Insulating layer
15 (15a, 15b, 15c, 15d) Detection element
16 Insulator
17 (17a, 17b, 17c, 17d) Loop circuit
18 Casing
18a Base portion
18b Cover portion
19 Communication unit
19a Radio wave transmission unit
19b Radio wave reception unit
20 Computation device

## Claims

1. A fluid leakage detection system for a marine hose provided with a hose body including a reinforcing layer and a buoyant layer layered in this order from an inner circumferential side between an inner surface layer and an outer surface layer and connection fittings connected to both respective ends of the hose body in a longitudinal direction, the inner surface layer including an inner circumferential region as a flow path, the fluid leakage detection system comprising:
the marine hose;
a detector including an IC tag that is passive and a loop circuit formed of a detection element connected to the IC tag;
a communication unit disposed outside the marine hose and configured to wirelessly communicate with the IC tag; and
a computation device into which obtained data from the communication unit is input;
the IC tag being disposed on a surface of the marine hose,
the detection element being formed of conductive rubber or conductive paste whose electrical resistance value changes to a value equal to or greater than a preset reference by being impregnated with fluid flowing through the flow path, the detection element continuously extending in the longitudinal direction of the hose body between the inner surface layer and the reinforcing layer,
the IC tag being activated by transmission radio waves transmitted from the communication unit, return radio waves being transmitted from the IC tag activated in response to the transmission radio waves, and thus wireless communication between the IC tag and the communication unit being performed, and
electrical resistance value data at the loop circuit when the IC tag is activated being transmitted from the IC tag to the communication unit via the return radio waves and being input into the computation device as the obtained data, and presence or absence of leakage of the fluid from the flow path being determined by the computation device in accordance with a magnitude of a difference between the obtained data input and preset reference resistance value data.

2. The fluid leakage detection system for a marine hose according to claim 1, wherein the loop circuit is spirally wound and extends around the hose body.

3. The fluid leakage detection system for a marine hose according to claim 1, comprising
a plurality of the loop circuits, wherein
each of the loop circuits is disposed at intervals in a circumferential direction of the hose body and linearly extends in the longitudinal direction of the hose body.

4. The fluid leakage detection system for a marine hose according to any one of claims 1 to 3, wherein
the marine hose is a single carcass type including only one reinforcing cord layer group as the reinforcing layer, and
the loop circuit is disposed on an outer circumferential surface of the inner surface layer.

5. The fluid leakage detection system for a marine hose according to any one of claims 1 to 3, wherein
the marine hose is a double carcass type including two of the reinforcing layers layered at intervals in a radial direction of the hose body with a fluid retention layer interposed therebetween, and
the loop circuit is disposed on an outer circumferential surface of the inner surface layer or in the fluid retention layer.

6. A fluid leakage detection method for a marine hose provided with a hose body including a reinforcing layer and a buoyant layer layered in this order from an inner circumferential side between an inner surface layer and an outer surface layer and connection fittings connected to both respective ends of the hose body in a longitudinal direction, the inner surface layer including an inner circumferential region as a flow path, the fluid leakage detection method comprising:
using a detector including an IC tag that is passive and a loop circuit formed of a detection element connected to the IC tag, a communication unit disposed outside the marine hose and configured to wirelessly communicate with the IC tag, and a computation device into which obtained data from the communication unit is input;
disposing the IC tag on a surface of the marine hose, forming the detection element of conductive rubber or conductive paste whose electrical resistance value changes to a value equal to or greater than a preset reference by being impregnated with fluid flowing through the flow path, and continuously extending the detection element in the longitudinal direction of the hose body between the inner surface layer and the reinforcing layer;
activating the IC tag with transmission radio waves transmitted from the communication unit, transmitting return radio waves from the IC tag to the communication unit in response to the transmission radio waves, thus performing wireless communication between the IC tag and the communication unit, transmitting electrical resistance value data at the loop circuit when the IC tag is activated from the IC tag to the communication unit via the return radio waves, and inputting the electrical resistance value data as the obtained data into the computation device; and
determining, by the computation device, presence or absence of leakage of the fluid from the flow path in accordance with a magnitude of a difference between the obtained data input and preset reference resistance value data.
